# EUROPEAN PATENT APPLICATION

(11) **EP 4 622 090 A1**
(43) Date of publication of application: **24.09.2025**
(21) Application number: 25164206.2
(22) Date of filing: 17.03.2025
(51) Int. Cl.: H02M 7/5387, H02M 5/458, H02J 3/32, H02J 7/00, H01M 10/05, H01M 10/42

(54) **UNIVERSAL BIDIRECTIONAL POWER CONVERTER WITH AGNOSTIC DIRECT CURRENT ENERGY STORAGE OR ENERGY SOURCE**

(30) Priority: 18.03.2024 US 202463566453 P
(71) Applicant: Vertiv Corporation, Columbus, OH 43085 (US)
(72) Inventor: MALY, Douglas Keith, Stubicke Toplice (HU); MRKOVIC, Bosko, Konjscina (HU)
(74) Representative: Beal, James Michael

(57) **Abstract**

A modular power conversion system is disclosed. The modular power conversion system includes the novel topology which integrates a rectifier block, an inverter block, and DC/DC convertor block in a unified, Universal Convertor. Further, the UC can be ganged at the AC input or output terminals in a modular fashion. The UC delivers the added benefit that the DC stage is isolated, and also to be of unconstrained voltage magnitude. This delivers the benefit of easily ganging DC sources and loads; in the case of batteries, combined modular UC blocks are battery agnostic. The rectifier, DC voltage control, and inverter are each bidirectional: power can be controlled to flow in either direction.

## Description

### CROSS REFERENCE TO RELATED APPLICATIONS

This patent application claims the benefit of and priority to U.S. Provisional Patent Application Serial No. 63/566,453, filed March 18, 2024.

### FIELD

The following description relates to electrical power converters.

### BACKGROUND

Conventionally, in energy management and power systems, electrical power is delivered from a relatively stiff voltage source. An electronic power converter or power supply with a low internal resistance is referred to as a "stiff" power supply. Voltage stiffness is a measure of the relative resistance (impedance) of the source compared to the load. A stiff voltage source may have an output impedance that is small relative to the load. Additionally, output power is typically commanded as a stiff voltage. In systems designed to operate independently of voltage and frequency variations, a conventional converter relies on an intermediate stage that contains a stiff direct current (DC) voltage. However, this rigidity in the DC stage can pose challenges when working with varying battery voltages. It generally necessitates the use of an additional DC to DC converter to connect components like batteries to the DC stage. This inflexibility of the DC bus also results in constraints which prevent direct swap-outs of batteries with different chemistries or combination of different chemical battery types.

### SUMMARY

This disclosure relates generally to a Universal Converter (UC) of electrical power with optional, agnostic DC energy storage or source.

An aspect of the disclosed embodiments includes a modular power conversion system. The modular power conversion system comprises: an input stage configured to connect to a supply voltage or load voltage; first and second current source inverter (CSI) stages; a rectifier stage coupled to the input stage and configured to convert power from the input stage to the first CSI stage; and an inverter stage coupled to the second CSI stage and configured to convert power to an output load or source.

Another aspect of the disclosed embodiments includes a modular power conversion system. The modular power conversion system comprises: an input stage configured to connect to a supply voltage or load voltage; a first and second current source inverter (CSI) stages; a rectifier stage coupled to the input stage and configured to convert power from the input stage to the first CSI stage; and an inverter stage coupled to the second CSI stage and configured to convert power to an output load or source, wherein the first and the CSI stages include a plurality of inductors electrically connected between the rectifier stage and the inverter stage.

Another aspect of the disclosed embodiments includes a modular power conversion system. The modular power conversion system comprises: an input stage configured to connect to a supply voltage; first and second current source inverter (CSI) stages; a rectifier stage coupled to the input stage and configured to convert power from the input stage to the first CSI stage; and an inverter stage coupled to the second CSI stage and configured to convert power to an output load or source, wherein the first and the CSI stages include a plurality of inductors electrically connected between the rectifier stage and the inverter stage and arranged to store magnetic energy by means of current from the supply voltage.

These and other aspects of the present disclosure are disclosed in the following detailed description of the embodiments, the appended claims, and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of an exemplary embodiment of a modular power conversion system, according to the principles of the present disclosure.
FIG. 2 generally illustrates a modular approach to constructing power conversion systems using a modular power conversion system, according to the principles of the present disclosure.
FIG. 3 generally illustrates an exemplary embodiment of a single UC module or brick, according to the principles of the present disclosure.
FIG. 4 is a block diagram of another exemplary embodiment of a modular power conversion system, according to the principles of the present disclosure.
FIG. 5 generally provides exemplary embodiments of various configurations of bricks or modules, according to the principles of the present disclosure.
FIG. 6 is a block diagram of another exemplary embodiment of a modular power conversion system, according to the principles of the present disclosure.
FIG. 7 is a block diagram of another exemplary embodiment of a modular power conversion system for a split-phase voltage source and load, according to the principles of the present disclosure.
FIG. 8 is a block diagram of an exemplary embodiment of a single phase to three phase converter, according to the principles of the present disclosure.
FIG. 9 generally illustrates a single-line diagram of a power electronics circuit with an AC input that passes through a controlled rectifier, according to the principles of the present disclosure.
FIG. 10 generally provides a high-level overview of control perspective of the universal converter, according to the principles of the present disclosure.
FIG. 11 generally shows a schematic diagram of a rectifier block with current control, according to the principles of the present disclosure.
FIG. 12 generally illustrates the components and structure of a battery block in an electrical system, according to the principles of the present disclosure.
FIG. 13 generally illustrates an inverter block, according to the principles of the present disclosure.

Those skilled in the art will appreciate and understand that, according to common practice, various features of the drawings discussed below are not necessarily drawn to scale, and that dimensions of various features and elements of the drawings may be expanded or reduced to more clearly illustrate the embodiments of the present disclosure described herein.

### DETAILED DESCRIPTION

The following discussion is directed to various embodiments of the disclosure. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

The present specification and accompanying drawings disclose one or more embodiments that incorporate the features of the present disclosure. The scope of the present disclosure is not limited to the disclosed embodiments. The disclosed embodiments merely exemplify the present disclosure, and modified versions of the disclosed embodiments are also encompassed by the present disclosure. Embodiments of the present disclosure are defined by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially," "approximately," and "about" modifying a condition or relationship characteristic of a feature or features of an embodiment of the disclosure, are understood to mean that the condition or characteristic is defined to be within tolerances that are acceptable for operation of the embodiment for an application for which it is intended.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Embodiments disclosed herein are direct to a universal converter (UC), which allows for a singular modular component to function as an energy management system and cater to flexible power supplies with battery-agnostic DC voltage source/load and independent output power control. Some advantages of the embodiments disclosed herein include a streamlined and cost effective universal converter, as it eliminates the need for a separate DC/DC conversion stage. Moreover, the universal converter's scalable design allows for modules to be connected in parallel sequentially, offering an extensive range for DC energy storage capacity because each DC energy source or load is isolated from the other by means of the CSI elements.

Further, the embodiments disclosed herein are suited for Uninterruptible Power Supply (UPS) applications. Benefits include that the universal converter can serve as a general energy management system, integrating utility power with alternative energy sources to ensure reliable output. In a distributed power system, the UC may allow energy sources to be scaled up or down by adding or subtracting modules or bricks. The UC may work on multiphase AC power, of which single phase is a subset. While continuously conditioning input current, the UC may also serve as a source of reactive energy which eliminates or reduces capacitor banks which are commonly required at repeated intervals along the electrical distribution grid. Each energy source or load of the UC may bi-directional. In the case of AC input and AC load terminals, the source or load may be replaced with DC.

By simplifying the converter, the UC's current source characteristics of the DC stage allow for arbitrary DC voltages (within limits). This creates an immediate savings of eliminating a DC/DC battery charger and discharger. The unrestricted nature of the DC stage allows a single brick to be used for a wide range of DC sources or DC energy storage units. This provides savings from a reduced set of converter offerings and for development, qualification, and inventory costs. Since the UC comes in a singular, but versatile unit, it can be used in parallel for diverse combinations which inherently deliver scalability. This creates savings from right-sizing converters to energy sources and loads. This avoids the problems of under-utilizing a fixed-size converter, especially with regard to the DC source/load, and allows power to be increased incrementally instead of replacing one fixed-size inverter with a different, larger design.

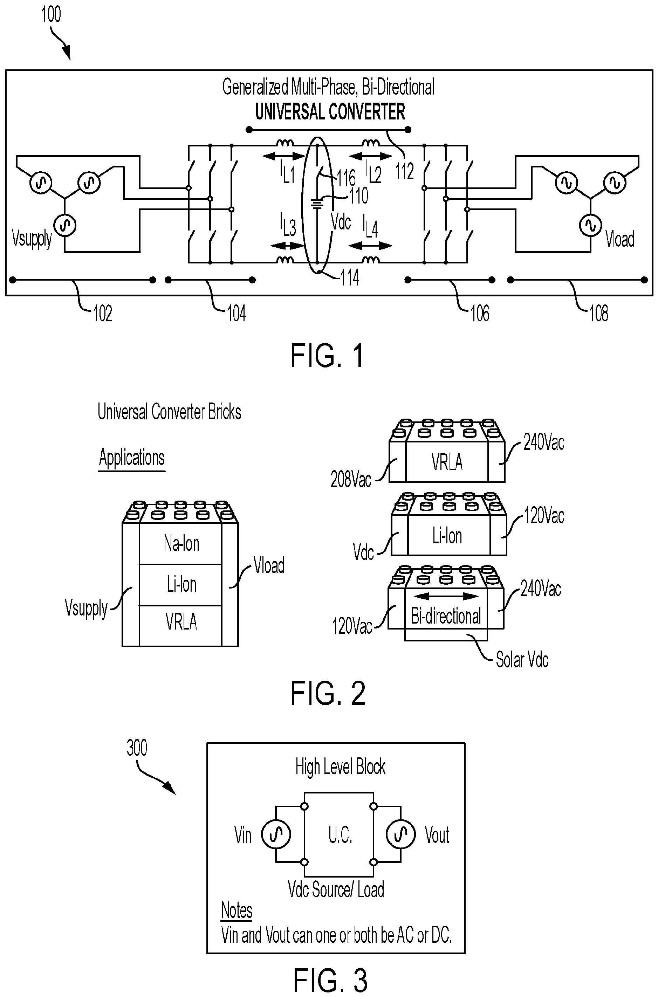

To help illustrate this, FIG. 1 will now be described. In particular, FIG. 1 is a block diagram of an exemplary embodiment of a modular power conversion system 100. More specifically, modular power conversion system 100 depicts a multi-phase, bi-directional universal converter. As shown in FIG. 1, modular power conversion system 100 includes an input stage 102, a rectifier stage 104, a DC link with two independent current source inverter (CSI) stages 112, DC energy stage (e.g. or load) 110, an inverter stage 106, and an output stage 108.

As depicted in FIG. 1, input stage 102 is configured to connect to a supply voltage ("Vsupply"). For example, as shown in FIG. 1, input stage 102 includes a multi-phase input. A multi-phase input as used herein refers to an electrical power system that uses one or more alternating current (AC) voltage delivered in multiple phases. Each phase may be offset in time, providing more constant and balanced power supply. In some embodiments, input stage 102 may include a single phase, two-phase, or three-phase input. In some embodiments, input stage 102 may include a DC voltage source.

As further depicted in FIG. 1, rectifier stage 104 is coupled to input stage 102 and configured to convert power from input stage 102. For example, as shown in FIG. 1, rectifier stage 104 includes multiple sets of switching devices configured to convert alternating current from a supply voltage to a direct current. In some embodiments, rectifier stage 104 may use active switching components (e.g., Insulated Gate Bipolar Transistors IGBTs or Metal Oxide Semiconductor Field Effect Transistors (MOSFETs) including wide bandgap devices such as silicon carbide (SiC) or Gallium Nitride (GaN)). Further, in some embodiments, the multiple sets of switching devices may be controlled by control circuitry, allowing for regulation of the output voltage and efficient conversion. Control circuitry may include a microcontroller that generates the gate drive signals for the multiple sets of switching devices, controlling their on and off states to synchronize with the AC input phases of input stage 102. In FIG. 1, the multiple sets of switching devices of rectifier stage 104 are arranged to convert the multi-phase AC input into a DC current output. In some embodiments, the arrangement may depend on the number of phases of input stage 102 and the rectification method (e.g., full bridge, half bridge, etc.). The multiple switching devices ability to turn on and off rapidly may allow for several control strategies, such as pulse-width modulation (PWM) or vector control.

As further depicted in FIG. 1, two independent CSI stages 112 includes a plurality of inductors (I_{L1}, I_{L2}, I_{L3}, and I_{L4}) electrically connected between rectifier stage 104 and inverter stage 106. The plurality of inductors may be arranged to store transient magnetic energy by means of current from Vsupply of input stage 102. After rectifier stage 104, the energy storage element

(inductor) effectively sources DC current in the sense of a CSI. In a symmetric manner, the inductors connected to inverter stage 106 also serve as a CSI. Two degrees of freedom are provided by the current "source" of I_{L1}, I_{L3} and the independent current "source" of I_{L2}, I_{L4}. Notably, in some embodiments, I_{L1} and I_{L3} may be combined as a single inductor, and I_{L2} and I_{L4} may be combined as a single inductor. In some embodiments, one or more capacitors may be used to filter out any ripples or fluctuations at CSI stages 112.

As further depicted in FIG. 1, modular power conversion system 100 further includes DC energy source or load stage 114 that is connected by means of two CSI elements of the CSI stages 112 between rectifier stage 104 and inverter stage 106. As further depicted in FIG. 1, DC energy source or load stage 114 includes a switching device 116 and a DC energy source or load 110. DC energy source or load stage 114 is configured to serve as a central point for connecting different stages of power conversion for modular power conversion system 100. Further, DC energy source or load stage 114 independently receives or sources commanded currents between rectifier stage 104 and inverter stage 106. For example, DC energy source or load stage 114 may ensure that a stable and consistent voltage level is maintained. DC energy source or load 110 may provide a stable voltage supply to inverter stage 106 or any other downstream components, allowing for DC energy source or load stage 114 to be controlled to a specific voltage level. In some embodiments, DC energy source or load 110 may provide additional DC power when needed for certain functions. In such configurations, DC energy source or load 110 can either be a primary source of DC power or act as an auxiliary source. Within in the context of FIG. 1, DC energy source or load 110 ensures that the necessary DC voltage is reliably provided to modular power conversion system 100, complementing the energy momentarily stored in the plurality of inductors I_{L1}, I_{L2}, I_{L3}, and I_{L4}. Alternatively, the DC source can regenerate energy to the supply. For example, photovoltaics as energy source can supply energy to the electricity grid. Further, in the case of loss of grid, a battery as DC source can supply energy to the load in applications such as an Uninterruptible Power Supply (UPS).

Switching device 116 (e.g., Insulated Gate Bipolar Transistors IGBTs or Metal Oxide Semiconductor Field Effect Transistors (MOSFETs)) is configured to control the flow of power. For example, switching device 116 may control the delivery of power from DC energy source or load stage 114 to downstream components. In some embodiments, switching device 116 may be controlled by control circuitry. For example, the control circuitry may include a microcontroller that generates the gate drive signals for switching device 116, which dictates the switching frequency and timing to ensure efficient power conversion.

As further depicted in FIG. 1, inverter stage 106 is coupled to the DC energy source or load stage 114 and configured to convert power from the DC voltage source. Further, inverter stage 106 includes multiple switching devices configured to convert DC to AC through controlled switching actions. Inverter stage 106 may include transistors (e.g., Insulated Gate Bipolar Transistors IGBTs or Metal Oxide Semiconductor Field Effect Transistors (MOSFETs)) to perform power conversion. In some embodiments, a pair of switching devices for each phase of an output may be utilized. For example, for a three-phase output, three pairs of switching devices may be utilized. In general, for multi-phase output, one pair of switching devices is utilized per phase. The multiple switching devices of the inverter stage may be controlled by control circuitry, allowing for regulation of the output voltage and efficient conversion. Control circuitry may include a microcontroller that generates the gate drive signals for the multiple sets of switching devices, controlling their on and off states to synchronize with the AC output phases of output stage 108. The multiple sets of switching devices may be turned on and off in a specific pattern. For example, in a single-phase inverter, an alternating pattern may be implemented to create a basic square wave. In three-phase inverters, the coordination of multiple switches may be used to create a three-phase AC output. In some embodiments, PWM, may be used to control the multiple sets of switching devices in order to optimize the fundamental, sinusoidal AC component. PWM varies the width of the pulses to the switching devices. By rapidly switching the DC input in a controlled manner, inverter stage 106 synthesizes an AC waveform. The rapid switching creates pulses of voltages that when average out over time resemble a sinusoidal waveform of AC power.

As further depicted in FIG. 1, output stage 108 is coupled to inverter stage 106 and configured to deliver converted power from DC energy source or load stage 114 to output stage 108, which includes a multi-phase output. A multi-phase output refers to an electrical power system that provides more than one alternating current voltage phase to a load. The phases in a multi-phase output may be offset in time to create a more continuous and balanced power flow. In other embodiments, input stage 108 may include a single phase, two-phase, or three-phase output. In some embodiments, output stage 108 may include a DC voltage source.

In some embodiments, two independent CSI stages 112 of modular power conversion system 100 are further configured to operate without a DC voltage source or load. For example, one application mode is "normal mode" for a UPS. The battery may be disconnected once fully charged. Other applications include removing a battery for maintenance or replacement purposes. Since the battery is isolated at one or more terminals, batteries can be "hot swapped" in or out, i.e., a battery module can be removed are added while the UPS is in operation. An additional application is a cause where DC storage or supply is simply not part of a user's system.

As described, embodiments include two independent CSIs. A battery (DC source or load) can be connected between the two CSIs, thus unifying the inverter and battery charger. In particular, in some embodiments, two currents may be commanded independently in each CSI stage (e.g., CSI stages 112) and a resultant third current may commanded in the DC voltage stage (e.g., DC energy source or load stage 114). The three currents sum to zero in accord with the Kirchhoff Current Law. Additionally, the sources and loads are fully bidirectional.

In some embodiments, the first or input stage rectifier commands current from the voltage source to be primarily sinusoidal, known as Power Factor Correction (PFC). Additionally, stiff voltage is supplied externally, the first or input stage rectifier commands sinusoidal current from the supply and delivers commanded quasi-DC current to the bus. The second or output inverter stage commands DC current in the DC bus, commands sinusoidal voltage to the load with an outer control loop, and inner control loop commands necessary current to the load. In some embodiments, a real-time current controller may be used to deliver current to an arbitrary load. Therefore, it can cover arbitrary load power factor and deliver a sinusoidal voltage to a non-linear load. The battery is not a stand-in for the capacitor of a VSI. It is managed by a third function: DC/DC for optional battery charger or photovoltaic DC voltage source.

FIG. 2 illustrates a modular approach to constructing power conversion systems using the universal converter. As depicted in FIG. 2, the bricks represent individual units or modules that can be configured and combined, referred to herein as "modular ganging," to accommodate a variety of power applications. The applications depicted include different types of internal batteries, such as a sodium-ion (Na-Ion) battery, lithium-ion (Li-Ion) battery, and Valve-Regulated Lead-Acid (VRLA) battery. The composite converter system is able to connect an arbitrary, "agnostic" battery chemistry because each battery is isolated from the other by means of the two-stage CSI. In some embodiments, the UC may manage an arbitrary collection of AC sources, such as the utility, or renewable sources such as uncontrolled wind and/or DC from photovoltaics, as well as energy storage, e.g., batteries or fuel cells.

Some benefits of the UC disclosed herein are its versatility and adaptability for various power applications. The UC may serve as the core of a power system with building blocks that can be optimized across different voltage levels, such as low voltage to medium/high voltage (MV/HV). The UC supports various phases, including single, two-phase, three-phase, multi-phase. Additionally, the UC is "hot swappable" and capable of auto-synchronization, which allows for components to be replaced or added without interrupting the system's operation. The UC is also configured to be battery agnostic, meaning it is compatible with various batter technologies. For example, the UC may also have fast charge capabilities and efficient energy management and storage. The modularity and scalability of the UC enables the UC to be tailored to specific requirements, and its fault tolerance and ability to instantly transfer from "Eco-Mode" contribute to its reliability and efficiency.

FIG. 3 illustrates an exemplary embodiment of a single UC block 300, in accordance with embodiments disclosed herein. The UC is configured to handle a wide range of applications, extending to a broad spectrum of UPS topologies. In FIG. 3, UC block 300 includes an input (Vin) and output (Vout) that can be configured for either AC or DC or a combination of both. This flexibility allows UC 300 to be integrated into various electrical systems, whether AC, DC, or a hybrid of both. In. FIG. 3, UC block 300 also includes a DC source or load that may provide a stable voltage supply to components of UC block 300.

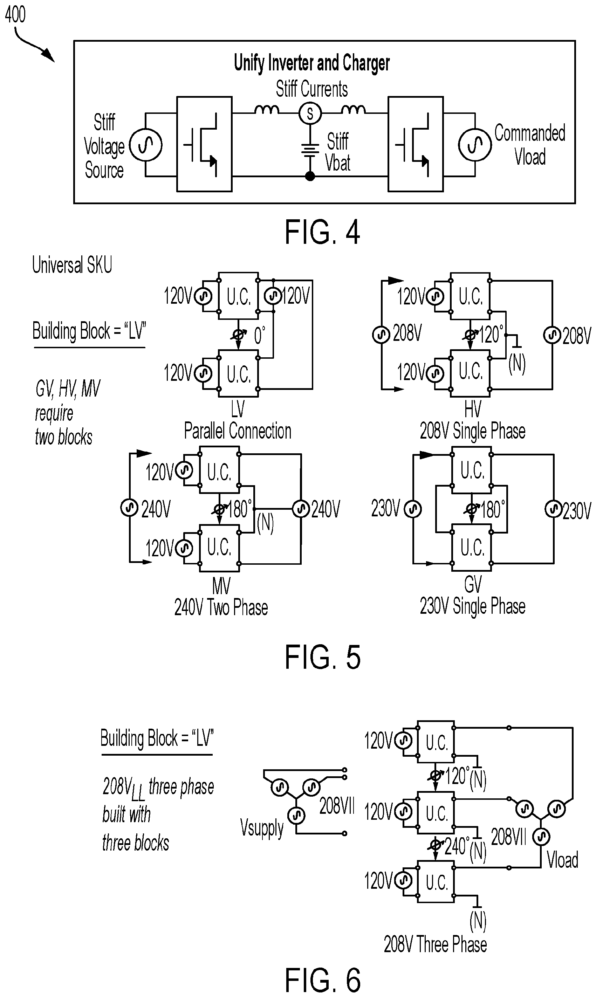

FIG. 4 is a block diagram of another exemplary embodiment of a modular power conversion system 400 for a modular power conversion system. In some embodiments, diodes or transistors (FETs) can be used.

FIG. 5 provides exemplary embodiments of various configurations of modular power conversion system bricks. More specifically, FIG. 5 illustrates different ways to connect these modular power conversion system bricks to achieve specific voltage and phase requirements. For a parallel connection, two units are connected in parallel, both providing 120V. In another configuration, for HV 208V single phase, where two units are connected in series, with a phase difference of 120 degrees, resulting in a 208V output is implemented. In another configuration, for the MV 240V two phase configuration, two units are also connected in series, both providing 120V with a phase difference of 180 degrees, and resulting in a 240V output. Still yet, for the grid voltage (GV) 230V single phase configuration, a GV single phase configuration with two units of 115V each are connected in series and a phase difference of 180 degrees, delivering 230V is implemented.

FIG. 6 illustrates a 208V three-phase system built using three UC bricks. The blocks are arranged to form a three-phase system. The phase shifts between the blocks are marked as 120 degrees and 240 degrees. In some embodiments, 230V_{LL} to 400V_{LL} three phase may be built by combining three individual UC blocks.

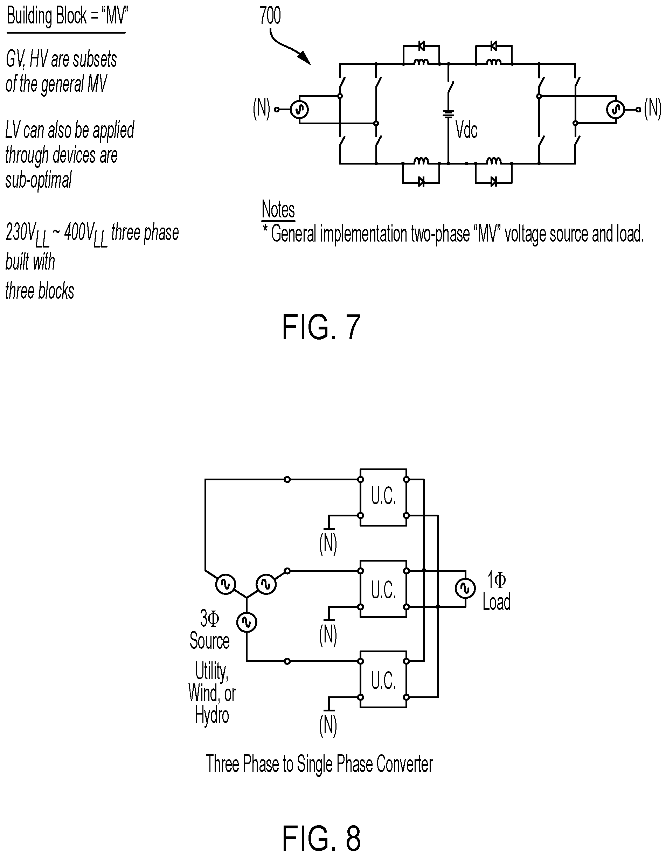

FIG. 7 is a block diagram of another exemplary embodiment of a modular power conversion system 700 for a two-phase MV voltage source and load. In some embodiments, GV and HV are subsets of the general MV brick.

FIG. 8 is a block diagram of an exemplary embodiment of a single phase to three phase converter. Each UC brick is connected to form a three-phase output to load. The input is a single-phase source that can range from 120V to 240V and can come from utility, wind, or DC solar. The three units are arranged to create a three-phase power with phase shifts of 120 degrees and 240 degrees between them.

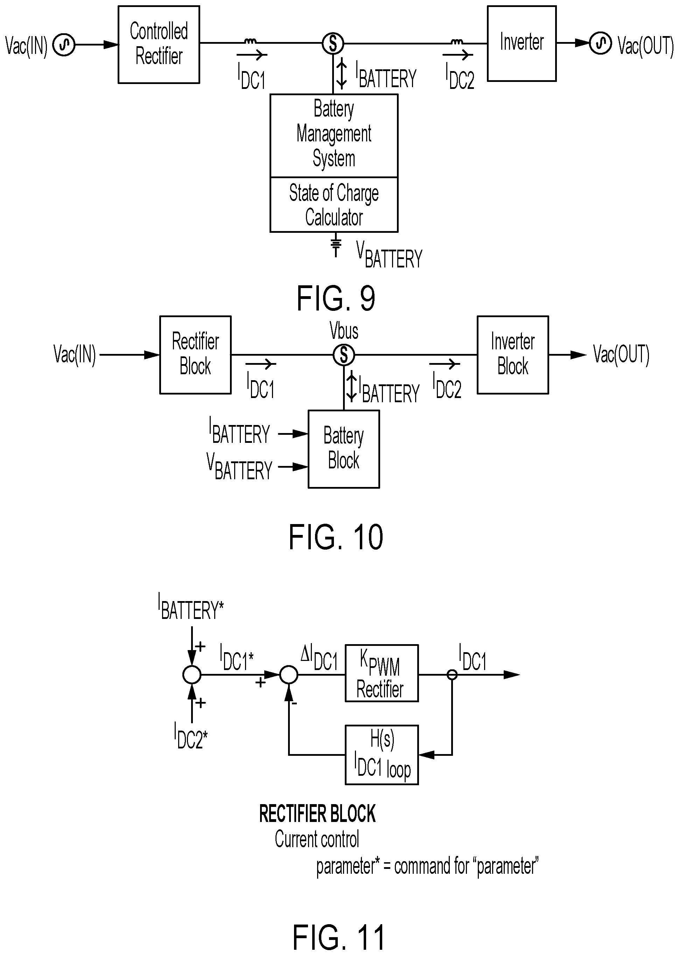

FIG. 9 illustrates a block diagram of a power electronics circuit with an AC input that passes through a controlled rectifier. The rectifier's output goes into BMS, which is connected to a battery state of charge calculator. The node that connects the active rectifier to the BMS also feeds into the inverter, which then provides an AC output.

FIG. 10 provides a high-level overview of control perspective of the universal converter. In particular, FIG. 10 illustrates the control signals essential to regulation of the UC for an application such as a UPS with battery energy storage.

FIG. 11 shows a schematic diagram of a rectifier block with current control.

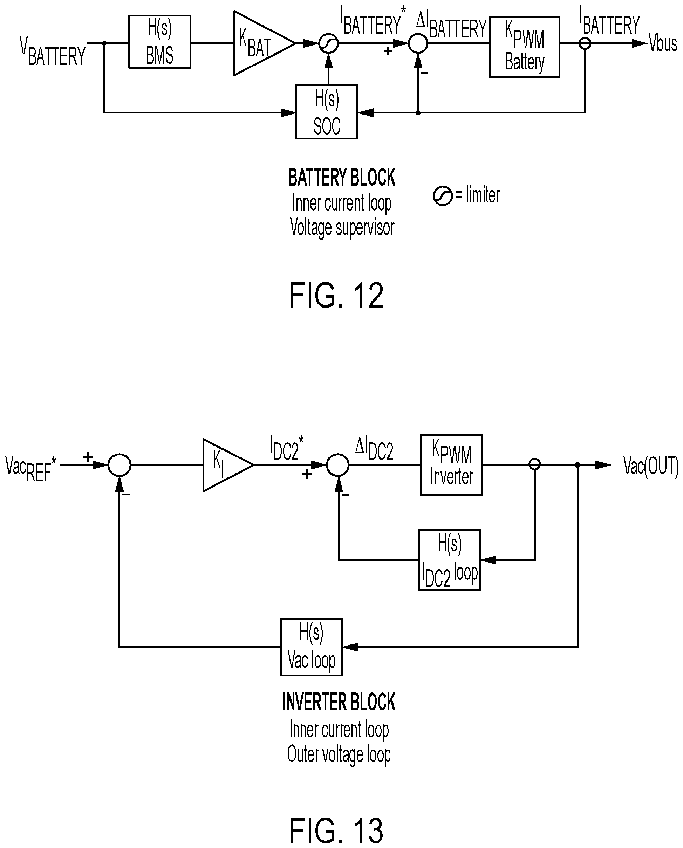

FIG. 12 illustrates the components and structure of a battery block in an electrical system. In FIG. 12, a battery management system (BMS), which is configured to monitor and manage the battery's state of change and state of health. The output from the BMS feeds into a power battery, which stores or provides electrical energy.

FIG. 13 illustrates an inverter block. FIG. 13 depicts an inner current loop and an outer voltage loop, indicating a control system configured to manage both current and voltage to ensure the inverter operates efficiently. In some embodiments, the inverter's function is to convert DC power to AC power. The control loops allow for control of the inverter to ensure that the output matches any required frequency and voltage parameters.

A modular power conversion system, comprises: an input stage configured to connect to a supply voltage or load voltage; first and second current source inverter (CSI) stages; a rectifier stage coupled to the input stage and configured to convert power from the input stage to the first CSI stage; and an inverter stage coupled to the second CSI stage and configured to convert power to an output load or source.

The first and the CSI stages include a plurality of inductors electrically connected between the rectifier stage and the inverter stage.

The rectifier stage includes a set of switching devices configured to convert alternating current from the supply voltage to a DC.

The inverter stage includes a set of switching devices configured to convert DC from the second CSI stage to alternating current to supply to the output load or source.

The modular power conversion system further comprises: at least one DC voltage source electrically connected between the first and second CSI stages; and a switching device in series with the DC voltage source.

The at least one DC voltage source includes a sodium-ion (Na-Ion) battery.

The at least one DC voltage source includes lithium-ion (Li-Ion) battery.

The at least one DC voltage source includes Valve-Regulated Lead-Acid (VRLA) battery.

The modular power conversion system further comprises control circuitry configured to control the switching device to control delivery of power from the at least one DC voltage source.

Input stage includes a multi-phase input.

The first and the second CSI stages are configured to operate without the supply voltage or load voltage.

A modular power conversion system, comprises: an input stage configured to connect to a supply voltage or load voltage; a first and second current source inverter (CSI) stages; a rectifier stage coupled to the input stage and configured to convert power from the input stage to the first CSI stage; and an inverter stage coupled to the second CSI stage and configured to convert power to an output load or source, wherein the first and the CSI stages include a plurality of inductors electrically connected between the rectifier stage and the inverter stage.

The rectifier stage includes a set of switching devices configured to convert alternating current from the supply voltage to a DC.

The inverter stage includes a set of switching devices configured to convert DC from the second CSI stage to alternating current to supply to the output load or source.

The modular power conversion system further comprises: at least one DC voltage source electrically connected between the first and second CSI stages; and a switching device in series with the DC voltage source.

The at least one DC voltage source includes a sodium-ion (Na-Ion) battery.

The at least one DC voltage source includes lithium-ion (Li-Ion) battery.

The at least one DC voltage source includes Valve-Regulated Lead-Acid (VRLA) battery.

The first and the CSI stages are configured to operate without the supply voltage or load voltage.

A modular power conversion system, comprises: an input stage configured to connect to a supply voltage; first and second current source inverter (CSI) stages; a rectifier stage coupled to the input stage and configured to convert power from the input stage to the first CSI stage; and an inverter stage coupled to the second CSI stage and configured to convert power to an output load or source, wherein the first and the CSI stages include a plurality of inductors electrically connected between the rectifier stage and the inverter stage and arranged to store magnetic energy by means of current from the supply voltage.

Implementations of the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present disclosure and do not limit the present disclosure. On the contrary, the disclosure is intended to cover various modifications and equivalent arrangements included within the scope of the appended claims, which scope is to be accorded the broadest interpretation to encompass all such modifications and equivalent structure as is permitted under the law.

## Claims

1. A modular power conversion system, comprising:
an input stage configured to connect to a supply voltage or load voltage;
first and second current source inverter (CSI) stages;
a rectifier stage coupled to the input stage and configured to convert power from the input stage to the first CSI stage; and
an inverter stage coupled to the second CSI stage and configured to convert power to an output load or source.

2. The modular power conversion system of claim 1, wherein the first and the second CSI stages include a plurality of inductors electrically connected between the rectifier stage and the inverter stage.

3. The modular power conversion system of claim 1 or claim 2, wherein the rectifier stage includes a set of switching devices configured to convert alternating current from the supply voltage to a DC.

4. The modular power conversion system of any preceding claim, wherein the inverter stage includes a set of switching devices configured to convert DC from the second CSI stage to alternating current to supply to the output load or source.

5. The modular power conversion system of any preceding claim, further comprising:
at least one DC voltage source electrically connected between the first and second CSI stages; and
a switching device in series with the DC voltage source.

6. The modular power conversion system of claim 5, wherein the at least one DC voltage source includes a sodium-ion (Na-Ion) battery.

7. The modular power conversion system of claim 5 or claim 6, wherein the at least one DC voltage source includes lithium-ion (Li-Ion) battery.

8. The modular power conversion system of any of claims 5-7, wherein the at least one DC voltage source includes Valve-Regulated Lead-Acid (VRLA) battery.

9. The modular power conversion system of any of claims 5-8, further comprising control circuitry configured to control the switching device to control delivery of power from the at least one DC voltage source.

10. The modular power conversion system of any preceding claim, wherein the input stage includes a multi-phase input.

11. The modular power conversion system of any preceding claim, wherein the first and the second CSI stages are configured to operate without the supply voltage or load voltage.

12. The modular power conversion system of any preceding claim, wherein the first and the CSI stages include a plurality of inductors electrically connected between the rectifier stage and the inverter stage and arranged to store magnetic energy by means of current from the supply voltage.
